# FASCICULE DE BREVET EUROPEEN

(11) **EP 0 617 524 B1**
(45) Date de publication et mention de la délivrance du brevet: **28.04.1999**
(21) Numéro de dépôt: 94400623.8
(22) Date de dépôt: 23.03.1994
(51) Int. Cl.: H04B 7/26

(54) **Procédé de transmission radio-électrique utilisant des stations répétrices à retournement de spectre**
Radioelektrisches Übertragungsverfahren, das Relaisstationen mit Spektruminversion benutzt
Radio-electric transmission method using repeater stations with spectrum inversion

(30) Priorité: 26.03.1993 FR 9303528
(43) Date de publication de la demande: 28.09.1994
(73) Titulaire: NORTEL MATRA CELLULAR, 78042 Guyancourt (FR)
(72) Inventeur: Marque-Pucheu, Gérard, F-75011 Paris (FR)
(74) Mandataire: Loisel, Bertrand

(56) Documents cités:
- EP-A- 0 415 810
- US-A- 4 581 765
- US-A- 5 168 522
- IEEE TRANSACTIONS ON VEHICULAR TECHNOLOGY, vol.VT-32, no.4, Novembre 1983, NEW-YORK,US; pages 254 - 259 MASAHICHI KISHI ET AL 'Digital Signal Processing Spectrum Inversion for Analog Speech Channels'

## Description

La présente invention concerne un procédé pour transmettre des signaux numériques par voie hertzienne sur une bande de fréquences prédéfinie, une station répétrice pour la mise en oeuvre de ce procédé, ainsi qu'un réseau de communication radio-téléphonique faisant appel à ce procédé.

On connaît des réseaux de communication radio-téléphonique comportant une série de stations centrales téléphoniques reliées à une série de bases de transmission fixes réparties sur le territoire à couvrir par le réseau de communication, chaque base de transmission fixe comportant un organe d'interface radio-téléphonique, un émetteur et un récepteur pour communiquer avec les stations mobiles selon une liaison radio.

L'implantation d'une base de transmission implique un certain nombre de contraintes en particulier la présence d'un mât portant les antennes permettant la liaison radio avec les stations mobiles ainsi que d'un local pouvant accueillir la base. Cette implantation suppose également le passage de câbles téléphoniques ayant pour fonction de raccorder la base de transmission aux stations centrales téléphoniques.

Par ailleurs, on cherche actuellement à réduire la puissance et la portée des stations mobiles de façon à limiter leur volume et leur coût. La portée des stations mobiles est également réduite par l'utilisation de fréquences plus élevées pour la liaison radio entre les stations mobiles et les bases de transmission fixes. Il est donc nécessaire d'augmenter le nombre de bases de transmission, solution dont le coût devient prohibitif dans les zones à faible densité de communication (zones rurales).

Une solution à ce problème consiste à employer, pour une ou plusieurs stations de transmission fixes, une ou plusieurs stations répétrices (voir EP-A-0 415 810).

En général, les stations répétrices comprennent simplement des amplificateurs montés entre des antennes de réception et d'émission. Du fait de l'utilisation d'une même fréquence radio-électrique pour l'émission et la réception, ce principe de structure d'une station répétrice ne peut être utilisé que lorsque les conditions d'utilisation de la station répétrice permettent un isolement suffisant entre les antennes d'émission et les antennes de réception. Ce critère est vérifié de façon convenable dans un certain nombre de cas, en particulier lorsque la zone couverte par l'émission de la station répétrice présente des caractéristiques de propagation radio-électrique particulières, par exemple en présence d'un tunnel ou d'un autre ouvrage souterrain, ou lorsque l'on utilise comme antennes des dispositifs à rayonnement localisé tels que des câbles à pertes.

Cette solution ne convient donc pas pour répondre au besoin cité plus haut.

On peut également utiliser des stations répétrices à transposition de fréquence. On connaît ainsi, dans certaines applications, des stations répétrices où la transposition est effectuée dans une bande de fréquences réservée à ce type de transmission par exemple la bande des 38 GHz (voir EP-A-0 415 810).

Mais souvent, l'utilisation d'une bande de fréquence réservée à cet usage n'est pas possible, en particulier, pour des raisons réglementaires. Il est en théorie possible d'utiliser des fréquences disponibles dans la bande réservée aux communications avec les stations mobiles. Cette solution présente toutefois le grave inconvénient de perturber le fonctionnement des stations mobiles qui peuvent interpréter la liaison radio-électrique ainsi établie entre la base de transmission fixe et la ou les stations répétrices comme un signal radio-électrique leur étant destiné.

Un but de la présente invention est de proposer un mode de transmission entre les bases de transmission fixes et les stations répétrices qui ne perturbe pas le fonctionnement des stations mobiles.

L'invention propose ainsi un procédé tel que défini dans la revendication 1. Selon ce procédé, le spectre des signaux radio émis par la base de transmission à destination de la station répétrice est retourné par rapport au spectre des signaux radio réémis par la station répétrice à destination des stations mobiles. Grâce au retournement du spectre, tout signal émis par la base de transmission à destination d'une station répétrice sera ininterprétable par les stations mobiles. Il est donc possible de multiplier les stations répétrices relativement bon marché pour couvrir une zone géographique étendue.

Des techniques de retournement de spectre utilisées afin d'éviter la réception par des personnes non autorisées d'un signal audio transmis par radio sont par exemple décrites dans l'article de MASAHICHI KISHI et al. intitulé "Digital Signal Processing Spectrum Inversion for Analog Speech Channels", IEEE Transactions on Vehicular Technology, vol. VT-32, n° 4, novembre 1983, N.Y., U.S.A., pages 254-259 et dans le brevet US 4 581 765.

L'économie réalisée est particulièrement appréciable lorsque le retournement du spectre au niveau de la station répétrice est effectué sans régénération du signal numérique, par des moyens radio-électriques de transposition.

Si on souhaite éviter de modifier la constitution matérielle de la base de transmission, il est possible, avant de moduler le signal numérique à émettre par la base de transmission, d'opérer sur ce signal une transformation logique qui, après modulation autour d'une fréquence décalée, est équivalente à un retournement du spectre du signal radio. La mise en oeuvre du procédé ne requiert alors au niveau de la base de transmission qu'une modification des logiciels de l'interface radio-téléphonique.

Dans son second aspect, l'invention propose une station répétrice comprenant des premiers moyens d'émission et de réception pour la communication avec la base de transmission, des seconds moyens d'émission et de réception pour la communication avec les stations mobiles, une première ligne pour traiter les signaux radio reçus par les premiers moyens d'émission et de réception avant réémission par les seconds moyens d'émission et de réception, et une seconde ligne pour traiter les signaux radio reçus par les seconds moyens d'émission et de réception avant réémission par les premiers moyens d'émission et de réception, ladite première ligne comportant au moins un dispositif de transposition supradyne pour effectuer un retournement du spectre du signal radio.

Enfin, l'invention propose un réseau de communication radio-téléphonique comprenant au moins une station centrale téléphonique, des bases de transmission reliées à la station centrale téléphonique pour assurer une interface radio-téléphonique numérique, et des stations répétrices pour recevoir des signaux radio émis par au moins une des bases de transmission et réémettre sur la même bande de fréquences des signaux radio à destination de stations mobiles, caractérisé en ce que la base de transmission et la station répétrice sont agencées pour que le spectre des signaux radio émis par la base de transmission et reçus par la station répétrice soit retourné par rapport au spectre des signaux radio réémis par la station répétrice à destination des stations mobiles.

D'autres particularités et avantages de la présente invention apparaîtront dans la description ci-après d'un exemple de réalisation préféré mais non limitatif.

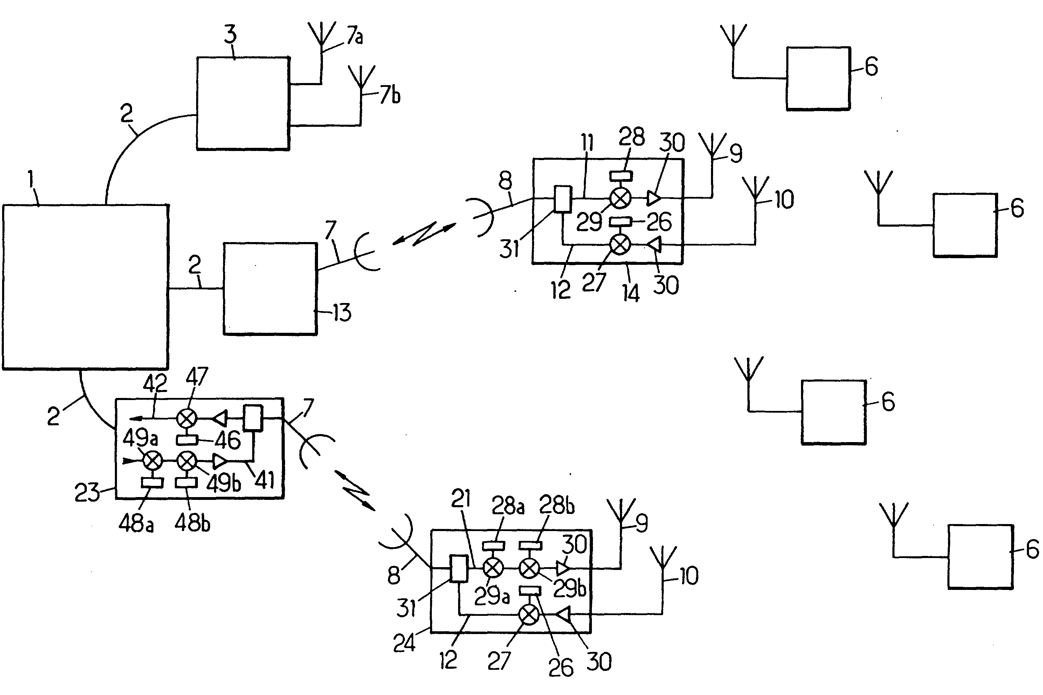

La figure unique du dessin annexé représente un schéma d'ensemble d'un réseau de communication radio-téléphonique selon l'invention.

Le réseau comprend une station centrale téléphonique 1 de type classique, reliée par des lignes téléphoniques filaires 2 à des bases de transmission fixes 3, 13, 23. Les bases de transmission fixes assurent une interface radio-téléphonique entre la liaison téléphonique avec la station centrale 1 et la liaison hertzienne établie avec des stations mobiles 6. Les bases de transmission sont équipées d'antennes d'émission et de réception omnidirectionnelles 7a, 7b permettant une communication hertzienne directe avec les stations mobiles 6.

Pour assurer une couverture territoriale étendue, le réseau comprend des stations répétrices 14, 24. Certaines des bases de transmission fixes 13, 23 sont équipées, en plus des antennes omnidirectionnelles 7a, 7b, d'antennes directionnelles 7 pour communiquer avec une ou plusieurs stations répétrices 14, 24 qui leur sont associées. Pour simplifier le dessin, on n'a représenté qu'une station répétrice par base de transmission ; mais en général il y aura plusieurs stations répétrices par base de transmission, la base de transmission pouvant comporter une antenne omnidirectionnelle pour communiquer avec chacune des stations répétrices qui lui sont associées. Chaque station répétrice 14, 24 comporte une antenne directionnelle 8 pour échanger des signaux radio avec la base de transmission 13, 23 qui lui est associée, une antenne d'émission 9 pour émettre des signaux radio à destination des stations mobiles 6, et une antenne de réception 10 pour recevoir des signaux radio provenant des stations mobiles 6.

Chaque station répétrice 14, 24 comporte une première ligne 11, 21 entre les antennes 8, 9 pour réémettre vers les mobiles 6 les signaux radio reçus de la base de transmission 13, 23, et une seconde ligne 12 entre les antennes 10, 8 pour réémettre vers la base de transmission 13, 23 les signaux radio reçus des stations mobiles 6. Chacune de ces lignes comporte un amplificateur 30 et est reliée à l'antenne 8 par l'intermédiaire d'un duplexeur 31.

Dans l'exemple d'application de l'invention à des communications de type GSM (Groupe Spécial Mobiles), les signaux radio destinés aux stations mobiles sont émis dans la bande de fréquences 890-915 MHz qui est divisée en 124 canaux porteurs, et les signaux radio émis par les mobiles sont dans la bande de fréquences 935-960 MHz. Pour éviter d'avoir à isoler l'antenne 8 de l'antenne de réception 10, la seconde ligne 12 de chaque station répétrice comporte un dispositif de transposition infradyne, comprenant un oscillateur 26 et un mélangeur 27, qui décale la fréquence des signaux réémis vers la base de transmission 13, 23 par rapport à celle des signaux reçus des stations mobiles 6.

La simple utilisation d'un dispositif de transposition infradyne analogue pour les premières lignes 11, 21 permettrait de découpler les antennes 8 et 9, mais elle ne serait pas satisfaisante car une station mobile 6 pourrait alors intercepter une communication radio établie entre une base de transmission fixe 13, 23 et une station répétrice 14, 24 et qui ne lui est pas destinée. C'est pourquoi, selon l'invention, la transposition effectuée sur la première ligne 11, 21 de chaque station répétrice correspond à un retournement de spectre.

Ce retournement de spectre est réalisé sans régénération du signal numérique transmis, par des moyens radioélectriques de transposition. Dans l'exemple de la station 14 représentée sur la figure, la première ligne 11 comporte un unique dispositif de transposition supradyne comprenant un oscillateur 28 et un mélangeur 29 associé à un filtre passe-bas. La fréquence F de l'oscillateur 28 est choisie pour transposer le canal fréquentiel des communications vers la station répétrice dans un autre canal fréquentiel de la bande, qui est alloué aux communications de la station répétrice vers les stations mobiles. Cette fréquence F est la même pour toutes les stations répétrices associées à une même base de transmission, mais elle peut être différente pour des stations répétrices associées à des bases de transmission différentes.

Dans l'exemple de la station 24 représentée sur la figure, la première ligne 21 comporte, en série, un dispositif de transposition supradyne comprenant un oscillateur 28a et un mélangeur 29a associé à un filtre passe-bas, et un dispositif de transposition infradyne comprenant un oscillateur 28b et un mélangeur 29b associé à un filtre passe-haut. Les fréquences respectives f₁, f₂ des oscillateurs 28a, 28b sont telles que leur somme soit égale à la fréquence F définie ci-dessus.

La base de transmission 13, 23 associée à chaque station répétrice est agencée pour émettre par son antenne 7 un signal radio à spectre inversé. Ceci peut être réalisé comme représenté schématiquement sur la figure pour la base 23 : entre le modem radio classique (non représenté) et l'antenne 7 est prévue une ligne d'émission 41 munie de moyens de transposition 48a, 49a, 48b, 49b identiques à ceux 28a, 29a, 28b, 29b de la première ligne 21 de la station répétrice 24. Ces moyens de transposition effectuent également un retournement de spectre. En outre, une ligne de réception 42 est prévue entre l'antenne 7 et le modem. Cette ligne de réception est munie de moyens de transposition 46, 47 qui effectuent la transposition inverse de celle des moyens de transposition 26, 27 de la seconde ligne 12 de la station répétrice 24.

Ainsi, le modem fonctionnant de la même manière que dans une base de transmission classique, le signal radio émis a un spectre retourné par rapport à celui qui serait interprétable par les stations mobiles 6. Même si le signal radio à spectre retourné est capté par une station mobile, il ne sera pas intelligible, par exemple parce qu'il ne sera pas porteur des bits de signature du réseau de communication radio-téléphonique. Ce n'est qu'après le retournement supplémentaire du spectre par la station répétrice que le signal devient interprétable par les stations mobiles.

Une autre façon de réaliser le retournement du spectre au niveau de la base de transmission 13 consiste à opérer sur le signal numérique à émettre, avant qu'il soit modulé, une transformation logique qui, une fois que le signal ainsi transformé est modulé autour d'une fréquence porteuse décalée, est équivalente à un retournement du spectre du signal radio. Dans le cas particulier du GSM, la modulation du signal est réalisée après précodage en modulation à déplacement minimum et filtrage gaussien amont (GMSK). La transformation logique peut alors consister à inverser séquentiellement un bit sur deux du signal numérique avant précodage, ce qui peut être réalisé simplement au moyen d'une opération OU EXCLUSIF entre le signal numérique et un signal binaire constitué par une alternance de "O" et de "1". Si, au lieu d'émettre le signal autour d'une fréquence porteuse f, on l'émet autour d'une fréquence porteuse F - f, F étant la fréquence de transposition des stations répétrices associées à la base de transmission considérée, telle que définie plus haut, on réalise le retournement de spectre recherché.

## Revendications

1. Procédé pour transmettre des signaux numériques par voie hertzienne sur une bande de fréquences prédéfinie entre une base de transmission (13;23) et des stations mobiles (6), dans lequel on utilise au moins une station répétrice (14;24) pour recevoir des signaux radio émis par la base de transmission et réémettre sur la même bande de fréquences des signaux radio à destination de stations mobiles, caractérisé en ce que le spectre des signaux radio émis par la base de transmission (13;23) à destination de la station répétrice (14;24) est retourné par rapport au spectre des signaux radio réémis par la station répétrice (14;24) à destination des stations mobiles (6).

2. Procédé selon la revendication 1, caractérisé en ce que le retournement du spectre au niveau de la station répétrice (14;24) est effectué sans régénération du signal numérique, par des moyens radioélectriques de transposition.

3. Procédé selon la revendication 1 ou 2, caractérisé en ce qu'avant de moduler le signal numérique à émettre par la base de transmission (13), on opère sur ce signal une transformation logique qui après modulation autour d'une fréquence décalée, produit un signal radio dont le spectre est retourné par rapport au spectre qu'il aurait en l'absence de ladite transformation logique.

4. Station répétrice (14;24) pour la mise en oeuvre du procédé selon l'une quelconque des revendications 1 à 3, comprenant des premiers moyens d'émission et de réception (8) pour la communication avec une base de transmission (13;23), des seconds moyens d'émission et de réception (9,10) pour la communication avec des stations mobiles (6), une première ligne (11;21) pour traiter les signaux radio reçus par les premiers moyens d'émission et de réception avant réémission par les seconds moyens d'émission et de réception, et une seconde ligne (12) pour traiter les signaux radio reçus par les seconds moyens d'émission et de réception avant réémission par les premiers moyens d'émission et de réception, ladite première ligne (11;21) comportant au moins un dispositif de transposition supradyne (28,29;28a, 29a) pour effectuer un retournement du spectre du signal radio.

5. Réseau de communication radio-téléphonique, comprenant au moins une station centrale téléphonique (1), des bases de transmission (3,13,23) reliées à la station centrale téléphonique pour assurer une interface radio-téléphonique numérique, et des stations répétrices (14,24) pour recevoir des signaux radio émis par au moins une des bases de transmission (13,23) et réémettre sur la même bande de fréquences des signaux radio à destination de stations mobiles (6), caractérisé en ce que la base de transmission (13,23) et la station répétrice (14,24) sont agencées pour que le spectre des signaux radio émis par la base de transmission et reçus par la station répétrice soit retourné par rapport au spectre des signaux radio réémis par la station répétrice à destination des stations mobiles (6).

## Patentansprüche

1. Verfahren zum Übertragen digitaler Signale auf dem Funkweg auf einem vorbestimmten Frequenzband zwischen einer Übertragungsbasis (13; 23) und mobilen Stationen (6), bei welchem wenigstens eine Relaisstation (14; 24) zum Empfangen der von der Übertragungsbasis ausgestrahlten Funksignale und zum Wiederausstrahlen von Funksignalen an mobile Stationen auf demselben Frequenzband benutzt wird, dadurch gekennzeichnet, daß das Spektrum der von der Übertragungsbasis (13; 23) an die Relaisstation (14; 24) ausgestrahlten Funksignale gegenüber dem Spektrum der von der Relaisstation (14; 24) an die mobilen Stationen (6) ausgestrahlten Funksignale umgekehrt ist.

2. Verfahren nach Anspruch 1, dadurch gekennzeichnet, daß die Spektruminversion im Bereich der Relaisstation (14; 24) ohne Regenerierung des digitalen Signals über radioelektrische Transpositionsmittel stattfindet.

3. Verfahren nach Anspruch 1 oder 2, dadurch gekennzeichnet, daß vor dem Modulieren des von der Übertragungsbasis (13) auszustrahlenden, digitalen Signals auf dieses Signal eine Logiktransformation angewendet wird, die nach Modulation um eine versetzte Frequenz ein Funksignal erzeugt, dessen Spektrum gegenüber dem Spektrum, das dieses bei fehlender Logiktransformation aufweisen würde, umgekehrt ist.

4. Relaisstation (14; 24) zur Durchführung des Verfahrens nach einem der Ansprüche 1 bis 3, mit ersten Mitteln zur Ausstrahlung und zum Empfang (8) für die Verbindung mit einer Übertragungsbasis (13; 23), mit zweiten Mitteln zur Ausstrahlung und zum Empfang (9, 10) für die Verbindung mit mobilen Stationen (6), mit einer ersten Leitung (11; 21) zum Verarbeiten der von den ersten Mitteln zur Ausstrahlung und zum Empfang empfangenen Funksignale vor Wiederausstrahlung über die zweiten Mittel zur Ausstrahlung und zum Empfang und mit einer zweiten Leitung (12) zum Verarbeiten der von den zweiten Mitteln zur Ausstrahlung und zum Empfang empfangenen Funksignale vor Wiederausstrahlung über die ersten Mittel zur Ausstrahlung und zum Empfang, wobei die erste Leitung (11; 21) wenigstens eine Supra-Dyn-Transpositionsvorrichtung (28, 29; 28a, 29a) zur Durchführung einer Spektruminversion des Funksignals aufweist.

5. Funksprechverbindungsnetz mit wenigstens einer zentralen Fernsprechstation (1), mit Übertragungsbasen (3, 13, 23), die mit der zentralen Fernsprechstation zur Sicherstellung einer digitalen Funkschnittstelle verbunden sind, und mit Relaisstationen (14, 24) zum Empfangen von über wenigstens eine der Übertragungsbasen (13, 23) ausgestrahlten Funksignalen und zum Wiederausstrahlen von Funksignalen an die mobilen Stationen (6) auf demselben Frequenzband, dadurch gekennzeichnet, daß die Übertragungsbasis (13, 23) und die Relaisstation (14, 24) derart angeordnet sind, daß das Spektrum der von der Übertragungsbasis ausgestrahlten und von der Relaisstation empfangenen Funksignale gegenüber dem Spektrum der von der Relaisstation an die mobilen Stationen (6) wiederausgestrahlten Funksignale umgekehrt ist.

## Claims

1. A method of transmitting digital signals by radio over a predefined frequency band between a base station (13;23) and mobile stations (6), wherein at least one repeater station (14;24) is used to receive radio signals transmitted by the base station and to retransmit radio signals to the mobile stations in the same frequency band, characterized in that the spectrum of the radio signals transmitted by the base station (13;23) to the repeater station (14;24) is reversed relative to the spectrum of the radio signals retransmitted by the repeater station (14;24) to the mobile stations (6).

2. A method according to claim 1, characterized in that spectrum reversal in the repeater station (14;24) is performed by radio transposition means without regenerating the digital signal.

3. A method according to claim 1 or 2, characterized in that prior to modulating the digital signal for transmission by the base station (13), said signal is subjected to a logical transformation which, after modulation about an offset frequency, produces a radio signal whose spectrum is reversed with respect to the spectrum that it would have in the absence of said logical transformation.

4. A repeater station (14;24) for implementing a method according to any one of claims 1 to 3, comprising first transmission and reception means (8) for communicating with a base station (13;23), second transmission and reception means (9,10) for communicating with mobile stations (6), a first line (11;21) for processing the radio signals received by the first transmission and reception means prior to retransmission by the second transmission and reception means, and a second line (12) for processing the radio signals received by the second transmission and reception means prior to retransmission by the first transmission and reception means, said first line (11;21) including at least one supradyne transposition circuit (28,29;28a,29a) for performing spectrum reversal of the radio signal.

5. A radiotelephone communications network comprising at least one telephone exchange station (1), base stations (3,13,23) connected to the telephone ex change station for providing a digital radiotelephone interface, and repeater stations (14,24) for receiving radio signals transmitted by at least one of the base stations (13,23) and for retransmitting radio signals in the same frequency band to mobile stations (6), characterized in that the base station (13,23) and the repeater station (14,24) are arranged so that the spectrum of the radio signal emitted by the base station and received by the repeater station is reversed relative to the spectrum of the radio signals retransmitted by the repeater station to the mobile stations (6).
